# EUROPÄISCHE PATENTSCHRIFT

(11) **EP 2 093 418 B1**
(45) Veröffentlichungstag und Bekanntmachung des Hinweises auf die Patenterteilung: **24.06.2015**
(21) Anmeldenummer: 09000998.6
(22) Anmeldetag: 24.01.2009
(51) Int. Cl.: F03D 7/02

(54) **Windenergieanlage mit Blatteinstellwinkelregler**
Wind turbine with pitch controller
Eolienne comprenant un régulateur de pas

(30) Priorität: 21.02.2008 DE 102008010466
(43) Veröffentlichungstag der Anmeldung: 26.08.2009
(73) Patentinhaber: Nordex Energy GmbH, 22419 Hamburg (DE)
(72) Erfinder: Kabatzke, Wolfgang, 21502 Geesthacht (DE); Wiese-Müller, Lars-Ulrich, 25421 Pinneberg (DE); Schlüter, Detlef, 18069 Rostock (DE)
(74) Vertreter: Hauck Patentanwaltspartnerschaft mbB

(56) Entgegenhaltungen:
- EP-A1- 1 524 433
- EP-A1- 1 832 743
- WO-A1-90/15968
- GB-A- 2 023 237
- US-A- 4 193 005

## Beschreibung

Die vorliegende Erfindung betrifft eine Windenergieanlage mit mindestens einem Rotorblatt, dessen Blatteinstellwinkel über einen Blatteinstellwinkel-Regler verstellbar ist. Ferner besitzt die Windenergieanlage eine Generator-Umrichtereinheit, bei der mindestens eine elektrische Größe über einen Umrichterregler einstellbar ist. Die Windenergieanlage verfügt über einen Triebstrang, der mit einem Rotor beginnt, welcher das mindestens eine Rotorblatt trägt. Der Triebstrang setzt sich mit einer Rotorwelle fort, die mit dem Rotor verbunden ist. Die Rotorwelle ist an ein Getriebe gekoppelt, dessen Ausgangswelle als Generatorwelle in den Generator mündet.

Der Blatteinstellwinkel eines Rotorblatts wird fachsprachlich auch als "Pitch-Winkel" bezeichnet, sodass der Blatteinstellwinkel-Regler auch als "Pitch-Regler" bezeichnet wird.

Aus GB 2 023 237 A1 ist eine Windenergieanlage bekannt, bei der die Rotordrehzahl und die Generatordrehzahl erfasst werden. Der Generator ist ein Synchrongenerator, der direkt auf das Netz aufgeschaltet ist.

Aus US 4,193,005 ist eine Windenergieanlage bekannt, bei der eine Rotordrehzahl und eine Generatordrehzahl erfasst werden. Der Generator ist ein Synchrongenerator, der direkt auf das Netz aufgeschaltet ist.

Aus EP 1 832 743 A1 ist eine Windenergieanlage bekannt, bei der an einer Steuereinrichtung sowohl eine erfasste Rotordrehzahl als auch eine erfasste Generatordrehzahl anliegen. Zur Steuerung des Generators wird entweder auf die Rotordrehzahl oder auf die Generatordrehzahl abgestellt.

Die Leistung der Windenergieanlage wird im Nennlastbereich maßgeblich über den Drehzahlsollwert geregelt. Die Regelung erfolgt hierbei über einen Umrichterregler, der gelegentlich auch als Hauptumrichterregler bezeichnet wird. Der derzeit bei Windenergieanlagen verwendete Regelungsansatz berücksichtigt als Signalquelle für den Umrichterregler die Generatordrehzahl. Die Genauigkeit der gemessenen Generatordrehzahl hängt stark von unterschiedlichen Einflussfaktoren ab, da der gemessenen Generatordrehzahl in der Regel Triebstrangschwingungen, Elastizitäten des Getriebes, Schwingungen des Maschinenträgers und die Toleranzen in einer etwaig vorgesehenen Kupplung überlagert sind. Bislang wurde, um diese Einflussfaktoren in der Generatordrehzahl auszublenden, eine starke Filterung und Dämpfung der gemessenen Werte vorgenommen. Insbesondere wurden die gemessenen Werte der Generatordrehzahl geglättet und in bestimmten Frequenzbereichen teilweise unterdrückt. In der Vergangenheit wurden die so gefilterten Werte der Generatordrehzahl ebenfalls an einen Blatteinstellwinkelregler angelegt, um hier abhängig von der Generatordrehzahl den Blatteinstellwinkel einzustellen. Insbesondere bei Windenergieanlagen mit einem großen Rotordurchmesser führen die gefilterten Werte der Generatordrehzahl zu einem trägen Verhalten bei der Regelung des Blatteinstellwinkels.

Der Erfindung liegt die technische Aufgabe zugrunde, eine Windenergieanlage mit einer Regelung für den Blatteinstellwinkel zur Verfügung zu stellen, die eine dynamische Regelung des Blatteinstellwinkels erlaubt, ohne dass unnötig häufig in die Regelung des Umrichters eingegriffen wird.

Erfindungsgemäß wird die Aufgabe durch eine Windenergieanlage mit den Merkmalen aus Anspruch 1 gelöst. Vorteilhafte Ausgestaltungen bilden die Gegenstände der Unteransprüche.

Die erfindungsgemäße Windenergieanlage besitzt mindestens ein Rotorblatt, dessen Blatteinstellwinkel über einen Blatteinstellwinkel-Regler einstellbar ist. Ferner ist die erfindungsgemäße Windenergieanlage mit einer Generator-Umrichtereinheit ausgestattet, bei der mindestens eine erzeugte elektrische Größe über einen Umrichterregler einstellbar ist. Die Generator-Umrichtereinheit ist nicht notwendigerweise als eine konstruktive oder bauliche Einheit ausgebildet, sondern bezeichnet lediglich Generator und Umrichter, die miteinander zusammenwirken, um die gewünschte elektrische Größe bereitzustellen. Die erfindungsgemäße Windenergieanlage ist ferner mit einem Triebstrang ausgestattet, an dessen vorderem Ende ein Rotor mit dem mindestens einen Rotorblatt angeordnet ist und der mit seinem anderen Ende in die Generator-Umrichtereinheit mündet. Der Triebstrang erstreckt sich also von dem Rotor hin zu dem Generator.

Erfindungsgemäß ist die Windenergieanlage mit zwei Drehzahlerfassungseinheiten an dem Triebstrang ausgestattet. Eine erste Drehzahlerfassungseinheit ist an dem Triebstrang nahe dem vorderen Ende vorgesehen. Die zweite Drehzahlerfassungseinheit ist an dem Triebstrang nahe der Generator-Umrichtereinheit vorgesehen. Bei der erfindungsgemäß ausgebildeten Windenergieanlage liegt die gemessene Drehzahl der ersten Drehzahlerfassungseinheit an dem Blatteinstellwinkelregler und die gemessene Drehzahl der zweiten Drehzahlerfassungseinheit an dem Umrichterregler jeweils als Eingangsgröße für die Regler an. Die Regler führen die Ermittlung des Einstellwinkels bzw. die Regelung des Umrichters abhängig von den jeweils gemessenen Eingangsgrößen der Drehzahl sowie den weiteren, zur Regelung notwendigen Eingangsgrößen durch. Bei der erfindungsgemäßen Ausgestaltung der Windenergieanlage erfasst die erste Drehzahlerfassungseinheit die Drehzahl am Triebstrang bzw. an dessen Rotorwelle weitgehend unabhängig von störenden Einflüssen und Schwingungen im Triebstrang, sodass die erfassten Drehzahlsignale weitgehend ohne Störung vorliegen. Die zweite Drehzahlerfassungseinheit an dem Triebstrang nahe der Generator-Umrichtereinheit erfasst einen Wert für die Generatordrehzahl, der die Drehzahl an dem Generator angibt und über den Umrichterregler zur Steuerung des Umrichters gesetzt werden kann.

In einer bevorzugten Ausgestaltung der erfindungsgemäßen Windenergieanlage ist die erste Drehzahlerfassungseinheit, vorzugsweise eine hochauflösende Drehzahlerfassungseinheit, am vorderen Ende des Triebstrangs angeordnet. Bevorzugt wird mit der ersten Drehzahlerfassungseinheit die Drehzahl der Rotorwelle optisch erfasst, wobei eine Auflösung von mehr als 2.000 Impulsen pro Umdrehung erfolgt. Die erste Drehzahlerfassungseinheit ist in dieser bevorzugten Ausgestaltung eine hochauflösende, optische Impulszähleinrichtung, die am vorderen Ende des Triebstrangs angeordnet ist. Die Verwendung einer solchen hochauflösenden, optischen Impulszähleinrichtung gestattet es, die Drehzahl der Rotorwelle im Bereich des Rotors sehr genau zu erfassen.

Die zweite Drehzahlerfassungseinheit ist bevorzugt zwischen einer Ausgangswelle eines Getriebes und einer Eingangswelle des Generators oder direkt am Generator angeordnet. Zweckmäßigerweise wird die gemessene Drehzahl der zweiten Drehzahlerfassungseinheit für den Umrichterregler durch eine Signalaufbereitung gefiltert, um beispielsweise Störsignale aus den gemessenen Werten für die Generatordrehzahl zu entfernen. Durch die Signalaufbereitung erfolgt bevorzugt eine Glättung der gemessenen Drehzahlwerte, wobei auch vorgesehen sein kann, dass bestimmte Frequenzen von Triebstrangschwingungen aus den gemessenen Drehzahlwerten herausgefiltert werden.

Bevorzugt ist eine zusätzliche Drehzahlüberwachungseinheit bei der Windenergieanlage vorgesehen, die die gemessenen Drehzahlwerte miteinander vergleicht und bei einer Abweichung der gemessenen Drehzahlwerte ein Steuersignal absetzt, das einen Fehler im Triebstrang anzeigt. Die Drehzahlüberwachungseinheit führt eine Plausibilitätsprüfung der beiden gemessenen Drehzahlwerte durch, wobei selbstverständlich das Übersetzungsverhältnis des Getriebes beim Vergleich der Drehzahlwerte mit berücksichtigt wird. Die Drehzahlüberwachungseinheit erlaubt es, einen Getriebefehler oder einen Defekt in der Kupplung festzustellen. In der Drehzahlüberwachungseinheit werden die gemessenen Drehzahlwerte unter Berücksichtigung des Übersetzungsverhältnisses durch das Getriebe miteinander verglichen.

In einer besonders bevorzugten Ausgestaltung liegt an dem Blatteinstellwinkelregler zusätzlich auch das Ausgangssignal der zweiten Drehzahlerfassungseinheit an. Dieser Signaleingang an dem Blatteinstellwinkelregler erlaubt es, eine Regelung des Blatteinstellwinkels zusätzlich oder alternativ abhängig von der gemessenen Drehzahlwerten der zweiten Drehzahlerfassungseinheit durchzuführen.

In einer Weiterbildung der Erfindung greift der Blatteinstellwinkel-Regler zur Regelung des Blatteinstellwinkels auf gemessene Werte der ersten Drehzahlerfassungseinheit zurück, wenn die gemessene Drehzahl der ersten oder zweiten Drehzahlerfassungseinheit einen vorbestimmten Schwellwert überschritten hat. Bezogen auf die Betriebszustände der Windenergieanlage bedeutet die drehzahlabhängige Umschaltung an dem Blatteinstellwinkelregler, dass ab einer gewissen Mindestdrehzahl der Rotorwelle die Regelung des Blatteinstellwinkels abhängig von den an der ersten Drehzahlerfassungseinheit gemessenen Drehzahlwerten erfolgt.

Die erfindungsgemäße Windenergieanlage wird nachfolgend anhand von zwei Figuren näher erläutert:
- Fig. 1: zeigt den schematischen Aufbau des Triebstrangs mit zwei Drehzahlerfassungseinheiten und
- Fig.2: ein Flussdiagramm zum Umschalten zwischen den gemessenen Drehzahlwerten.

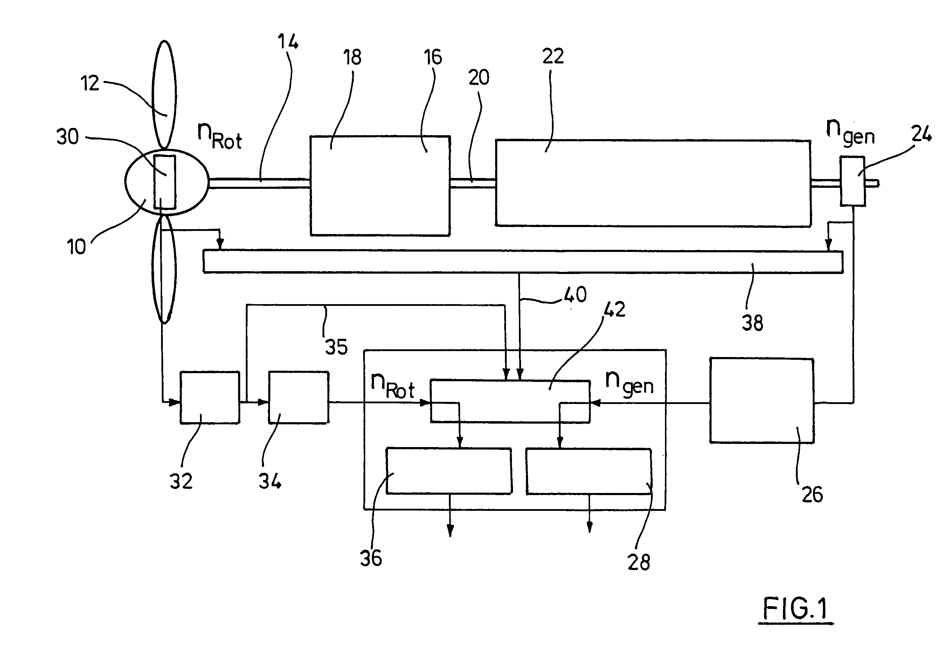

Figur 1 zeigt in einer schematischen Ansicht den Triebstrang einer Windenergieanlage mit einem Rotor 10 und zwei Rotorblättern 12. Mit dem Rotor 10 ist eine Rotorwelle 14 mit einer Kupplung 16 und einem Getriebe 18 verbunden. Das Getriebe besitzt ein Übersetzungsverhältnis, mit dem die Drehzahl der Rotorwelle hochgesetzt wird. Die Ausgangswelle 20 des Getriebes 18 mündet in einem Generator 22. Die Welle 20 wird nachfolgend als Generatorwelle 20 oder als schnelle Welle bezeichnet.

An dem Generator 22 ist ein Inkrementalgeber 24 angeordnet, der die Drehzahl der Generatorwelle 20 bzw. einer Welle in dem Generator 22 erfasst. Der Ausgang des Inkrementalgebers 24 wird über eine Signalaufbereitung 26 weiter an den Hauptumrichterregler 28 geleitet, über den eine Regelung des Umrichters und ggfs. auch des Generators erfolgt. Geregelt wird dabei die in das Netz einzuspeisende Wirkleistung der Generator-Umrichtereinheit.

Ebenfalls in Figur 1 dargestellt ist der Inkrementalgeber 30, der am vorderen Ende der Rotorwelle 14 in dem Rotor 10 angeordnet ist. Bei dem Inkrementalgeber handelt es sich um einen hochauflösenden Inkrementalgeber, der optisch 14 Bit je Umdrehung, bevorzugt sogar 16 Bit pro Umdrehung, erfassen kann. Die gemessene Drehzahl des Inkrementalgebers 30 wird über einen Impulswandler 32 und ein Auswertegerät 34 als nᵣₒₜ an einen Pitch-Regler 36 weitergeleitet. Der Pitch-Regler 36 erzeugt das entsprechende Signal zur Einstellung des Blatteinstellwinkels ϕ (nᵣₒₜ, ...). Soll kein Auswertegerät 34 für nᵣₒₜ verwendet werden, kann über Kanal 35 die Rotordrehzahl nᵣₒₜ auch direkt an der Steuereinheit 42 liegen.

Zusätzlich in Figur 1 ist ein Drehzahlüberwachungssystem 38 dargestellt, an dem die gemessene Rotordrehzahl 30 und die gemessene Generatordrehzahl 24 anliegen. Das Drehzahlüberwachungssystem 38 vergleicht unter Berücksichtigung des Übersetzungsverhältnisses am Getriebe 18 die beiden Drehzahlwerte und setzt bei Abweichungen über die Verbindung 40 ein Fehlersignal an eine Steuereinheit 42 ab. Die Steuereinheit 42 kann beispielsweise ansprechend auf das Fehlersignal hin, dass die gemessenen Drehzahlwerte nicht im richtigen Verhältnis zueinander stehen, ein Herunterfahren der Anlage auslösen.

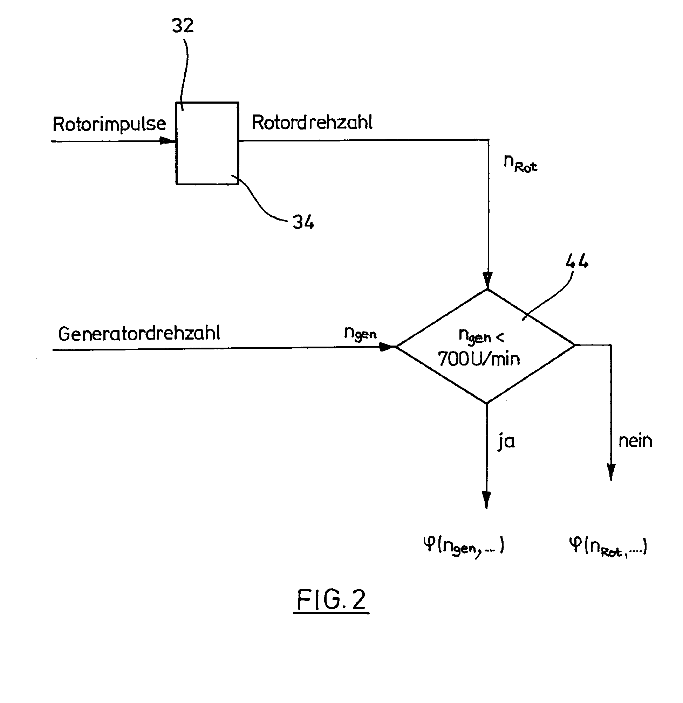

Im Betrieb der Windenergieanlage erfüllt die Steuereinheit 42 noch eine weitere Aufgabe. Die Steuereinheit 42 überprüft, ob die gemessene Rotordrehzahl des Inkrementalgebers 30 bereits an den Regler 36 angelegt werden soll. Hierzu überprüft die Steuereinheit 42, wie in Figur 2 dargestellt, ob die Generatordrehzahl, die an dem Inkrementalgeber 24 erfasst wurde, unterhalb eines vorbestimmten Schwellwerts liegt. In Figur 2 ist beispielhaft als ein solcher Schwellwert 700 U/min dargestellt. Je nach Bauart und Typ der Windenergieanlage können aber auch andere Werte als Schwellwert für die Generatordrehzahl verwendet werden. Bei einer ersten Messung hat es sich als vorteilhaft herausgestellt, den Schwellwert für die Generatordrehzahl so auszuwählen, dass die Windenergieanlage bei Erreichen des Schwellwerts ungefähr zwei Drittel ihrer Nennleistung produziert.

Für den Fall, dass die Generatordrehzahl n_{gen} kleiner als der vorbestimmte Schwellwert von 700 U/min ist, liegt an dem Pitch-Regler die Generatordrehzahl als Eingangsgröße an ϕ (n_{gen}, ...). Ist die Generatordrehzahl n_{gen} größer oder gleich dem vorbestimmten Wert von 700 U/min, arbeitet die Pitch-Regelung abhängig von der gemessenen Rotorzahl ϕ (nᵣₒₜ, ...). In Figur 2 ist die jeweilige Abhängigkeit der Pitch-Regelung dargestellt, über den Pitch-Winkel ϕ in Abhängigkeit von n_{gen} bzw. von nᵣₒₜ. Hierbei ist selbstverständlich das aktuelle Übersetzungsverhältnis des Getriebes zu berücksichtigen. Die entsprechende Abfrage 44 erfolgt in der Steuereinheit 42.

Beim Betrieb der Windenergieanlage erfolgt zunächst eine Pitch-Regelung in an sich bekannter Art und Weise, bei der die Pitch-Regelung abhängig von der gemessenen und entsprechend gefilterten Generatordrehzahl erfolgt. Wird eine gewisse Mindestdrehzahl an der Generatorwelle 20 überschritten, so dreht sich die Rotorwelle 14 schnell genug, um mit dem Inkrementalgeber 30 zuverlässig die Drehzahlwerte an der Rotorwelle zu bestimmen. In diesem Fall schaltet die Steuereinheit 42 um und eine Pitch-Regelung erfolgt abhängig von der über den Inkrementalgeber 30 gemessenen Drehzahl der Rotorwelle, die weitgehend frei von Schwingungen im Triebstrang ist. Die Inkrementalgeber 24 und 30 sind beide als hochauflösende Inkrementalgeber ausgebildet, die eine genaue Erfassung der Drehzahl erlauben.

## Patentansprüche

1. Windenergieanlage mit mindestens einem Rotorblatt, dessen Blatteinstellwinkel über einen Blatteinstellwinkel-Regler einstellbar ist, und mit einer Generator-Umrichtereinheit, bei der mindestens eine elektrische Größe über einen Umrichterregler einstellbar ist, wobei die Windenergieanlage einen Triebstrang aufweist, an dessen vorderem Ende ein Rotor mit dem mindestens einen Rotorblatt angeordnet ist und der in der Generator-Umrichtereinheit mündet, wobei
• eine erste Drehzahlerfassungseinheit (30) an dem Triebstrang nahe dem vorderen Ende und eine zweite Drehzahlerfassungseinheit (24) an dem Triebstrang nahe zu der Generator-Umrichtereinheit (22) angeordnet ist, **dadurch gekennzeichnet, dass**
• die gemessene Drehzahl (nᵣₒₜ) der ersten Drehzahlerfassungseinheit (30) an dem Blatteinstellwinkel-Regler (36) und die gemessene Drehzahl der zweiten Drehzahlerfassungseinheit (24) an dem Umrichterregler (28) jeweils als Eingangsgrößen an den Reglern anliegen.

2. Windenergieanlage nach Anspruch 1, **dadurch gekennzeichnet, dass** die erste Drehzahlerfassungseinheit (30) am vorderen Ende des Triebstrangs angeordnet ist.

3. Windenergieanlage nach Anspruch 1 oder 2, **dadurch gekennzeichnet, dass** die erste Drehzahlerfassungseinheit (30) die Drehzahl nᵣₒₜ der Rotorwelle (14) optisch erfasst.

4. Windenergieanlage nach einem der Ansprüche 1 bis 3, **dadurch gekennzeichnet, dass** die erste Drehzahlerfassungseinheit eine Auflösung von mehr als 2.000 Impulsen je Umdrehung besitzt.

5. Windenergieanlage nach einem der Ansprüche 1 bis 4, **dadurch gekennzeichnet, dass** die zweite Drehzahlerfassungseinheit (24) zwischen einer Ausgangswelle eines Getriebes (18) und einer Eingangswelle des Generators (22) oder an dem Generator (22) angeordnet ist.

6. Windenergieanlage nach Anspruch 5, **dadurch gekennzeichnet, dass** die gemessene Drehzahl der zweiten Drehzahlerfassungseinheit (24) für den Umrichterregler (28) durch eine Signalaufbereitung (26) gefiltert ist.

7. Windenergieanlage nach Anspruch 6, **dadurch gekennzeichnet, dass** die Signalaufbereitung (26) die gemessenen Drehzahlwerte glättet.

8. Windenergieanlage nach einem der Ansprüche 1 bis 7, **dadurch gekennzeichnet, dass** zusätzlich eine Drehzahlüberwachungseinheit (38) vorgesehen ist, die die gemessenen Drehzahlwerte (nᵣₒₜ, n_{gen}) miteinander vergleicht und bei einer Abweichung der gemessenen Drehzahlwerte ein Fehlersignal (40) absetzt, das einen Fehler im Triebstrang anzeigt.

9. Windenergieanlage nach einem der Ansprüche 1 bis 8, **dadurch gekennzeichnet, dass** an dem Blatteinstellwinkel-Regler zusätzlich die Ausgangssignale der zweiten Drehzahlerfassungseinheit anliegen.

10. Windenergieanlage nach einem der Ansprüche 1 bis 9, **dadurch gekennzeichnet, dass** der Blatteinstellwinkel-Regler zur Regelung des Blatteinstellwinkels auf gemessene Werte der ersten Drehzahlerfassungseinheit zurückgreift, wenn die gemessene Drehzahl der ersten oder zweiten Drehzahlerfassungseinheit einen vorbestimmten Schwellwert überschreitet.

## Claims

1. Wind turbine comprising at least one rotor blade, the pitch angle of said rotor blade being adjustable by means of a pitch controller, and a generator/converter unit, at least one electrical quantity of the generator/converter unit being adjustable by means of a converter controller (28), wherein the wind turbine furthermore comprises a drive train coupled with a rotor comprising the at least one rotor blade, the rotor being disposed at a front end of the drive train and the drive train ending in the generator/converter unit, wherein
• a first rotational speed detection unit (30) is provided at the drive train near the front end of the drive train and a second rotational speed detection unit (24) is provided at the drive train near the generator/converter unit (22), **characterised in that**
• the measured rotational speed (nᵣₒₜ) of the first rotational speed detection unit (30) is applied as an input variable to the pitch controller (36) and the measured rotational speed of the second rotational speed detection unit (24) is applied as an input variable to the converter controller (28).

2. Wind turbine according to claim 1, **characterised in that** the first rotational speed detection unit (30) is disposed at the front end of the drive train.

3. Wind turbine according to claim 1 or 2, **characterised in that** the first rotational speed detection unit (30) is configured to optically measure the rotational speed nᵣₒₜ of the rotor shaft (14).

4. Wind turbine according to one of claims 1 to 3, **characterised in that** the first rotational speed detection unit has a resolution of more than 2,000 pulses per revolution.

5. Wind turbine according to one of claims 1 to 4, **characterised in that** the second rotational speed detection unit (24) is disposed between an output shaft of a gear (18) and an input shaft of the generator (22) or at the generator (22).

6. Wind turbine according to claim 5, **characterised in that** the measured rotational speed of the second rotational speed detection unit (24) for the converter controller (28) is filtered by a signal processing means (26).

7. Wind turbine according to claim 6, **characterised in that** the signal processing means (26) is configured to smooth the measured rotational speed values.

8. Wind turbine according to one of claims 1 to 7, **characterised in that** an additional rotational speed monitoring unit (38) is provided which is configured to compare the measured rotational speed values (nᵣₒₜ, n_{gen}) to each other and, if a deviation is detected, issues an error signal (40) indicating an error in the drive train.

9. Wind turbine according to one of claims 1 to 8, **characterised in that** in addition, the output signals of the second rotational speed detection unit are applied to the pitch controller.

10. Wind turbine according to one of claims 1 to 9, **characterised in that** the pitch controller reverts to measured values of the first rotational speed detection unit for controlling the pitch angle if the measured rotational speed of the first or second rotational speed detection unit exceeds a predetermined threshold.

## Revendications

1. Éolienne avec au moins une pale de rotor, dont le pas de pale est réglable via un régulateur de pas de pale, et avec une unité générateur/convertisseur, dans laquelle au moins une grandeur électrique est réglable via un régulateur de convertisseur, l'éolienne ayant une ligne d'entraînement, sur l'extrémité avant de laquelle un rotor avec au moins une pale de rotor est arrangé et qui débouche dans l'unité générateur/convertisseur, dans l'éolienne
• une première unité de détection de vitesse de rotation (30) est arrangée sur la ligne d'entraînement près de l'extrémité avant, et une deuxième unité de détection de vitesse de rotation (24) est arrangée sur la ligne d'entraînement près de l'unité générateur/convertisseur (22), **caractérisé en ce que**
• la vitesse de rotation mesurée (nᵣₒₜ) de la première unité de détection de vitesse de rotation (30) est appliquée au régulateur de pas de pale (36) comme grandeur d'entrée, et la vitesse de rotation mesurée de la deuxième unité de détection de vitesse de rotation (24) est appliquée au régulateur de convertisseur (28) comme grandeur d'entrée.

2. Éolienne selon la revendication 1, **caractérisé en ce que** la première unité de détection de vitesse de rotation (30) est arrangée sur l'extrémité avant de la ligne d'entraînement.

3. Éolienne selon la revendication 1 ou 2, **caractérisé en ce que** la première unité de détection de vitesse de rotation (30) détecte la vitesse de rotation nᵣₒₜ de l'arbre de rotor (14) de manière optique.

4. Éolienne selon l'une quelconque des revendications 1 à 3, **caractérisé en ce que** la première unité de détection de vitesse de rotation (30) a une résolution de plus que 2.000 impulsions par rotation.

5. Éolienne selon l'une quelconque des revendications 1 à 4, **caractérisé en ce que** la deuxième unité de détection de vitesse de rotation (24) est arrangée entre un arbre de sortie d'une boite de transmission (18) et un arbre d'entrée d'un générateur (22) ou le générateur (22).

6. Éolienne selon la revendication 5, **caractérisé en ce que** la vitesse de rotation mesurée de la deuxième unité de détection de vitesse de rotation (24) est filtrée pour le régulateur de convertisseur (28) par un circuit de traitement de signal (26).

7. Éolienne selon la revendication 6, **caractérisé en ce que** le circuit de traitement de signal (26) défroisse les valeurs de vitesse de rotation mesurées.

8. Éolienne selon l'une quelconque des revendications 1 à 7, **caractérisé en ce que** une unité de surveillance de la vitesse de rotation (38) est en outre pourvue, qui compare les valeurs de vitesse de rotation mesurées (nᵣₒₜ, n_{gen}) l'une avec l'autre, et émet un signal d'erreur (40) chez une différence des valeurs de vitesse de rotation mesurées, qui indique une erreur dans la ligne d'entrainement.

9. Éolienne selon l'une quelconque des revendications 1 à 8, **caractérisé en ce que** les signaux de sortie du de la deuxième unité de détection de vitesse de rotation sont en outre appliqués au régulateur de pas de pale.

10. Éolienne selon l'une quelconque des revendications 1 à 9, **caractérisé en ce que** le régulateur de pas de pale recourt aux valeurs mesurées de la première unité de détection de vitesse de rotation pour réguler le pas de pale, quand la vitesse de rotation mesurée de la première ou de la deuxième unité de détection de vitesse de rotation dépasse une valeur de seuil prédéterminée.
